# FASCICULE DE BREVET EUROPEEN

(11) **EP 3 495 183 B1**
(45) Date de publication et mention de la délivrance du brevet: **09.02.2022**
(21) Numéro de dépôt: 18210140.2
(22) Date de dépôt: 04.12.2018
(51) Int. Cl.: B60J 5/10, B62D 35/00

(54) **OUVRANT DE VÉHICULE COMPRENANT UN ÉLÉMENT DE GARNISSAGE EN SAILLIE**
FAHRZEUG-ÖFFNUNGSELEMENT, DAS EIN VORSPRINGENDES EINSATZELEMENT UMFASST
VEHICLE DOOR COMPRISING A PROTRUDING PACKING ELEMENT

(30) Priorité: 08.12.2017 FR 1761858
(43) Date de publication de la demande: 12.06.2019
(73) Titulaire: Flex-N-Gate France, 25405 Audincourt (FR)
(72) Inventeur: BRET, Sébastien, 90140 BREBOTTE (FR)
(74) Mandataire: Lavoix

(56) Documents cités:
- EP-A1- 2 620 355
- DE-A1-102012 102 442
- DE-U1-202013 105 651
- DE-U1-202013 105 651
- FR-A1- 3 029 164
- US-A1- 2006 108 830

## Description

La présente invention concerne un ouvrant de véhicule, comprenant un corps principal définissant une ouverture fermée par une vitre, fixée sur au moins un bord supérieur de ladite ouverture, ledit bord supérieur étant formé sur une branche supérieure dudit corps, ladite branche supérieure comprenant en outre une cavité ouverte vers l'extérieur du corps, l'ouvrant comprenant en outre un premier élément de garnissage fixé sur la branche supérieure de façon à fermer hermétiquement ladite cavité, le premier élément de garnissage comprenant une partie en saillie s'étendant en saillie de la branche supérieure en regard de la vitre, de sorte qu'un espace fonctionnel s'étend entre ladite vitre et ladite partie en saillie.

L'invention concerne également un procédé d'assemblage d'un tel ouvrant.

L'invention s'applique par exemple à un hayon de véhicule fermant l'accès au volume de rangement arrière du véhicule, le premier élément de garnissage formant un becquet conférant un aspect particulier à la partie supérieure du hayon en s'étendant en saillie de la partie supérieure du hayon.

Un tel becquet est généralement formé par une pièce rapportée sur le hayon fini dans lequel la lunette arrière est déjà fixée sur le corps du hayon et dont l'étanchéité a été assurée par une peau fixée sur le corps du hayon. Cependant une telle solution est particulièrement coûteuse car elle nécessite l'ajout d'une pièce supplémentaire sur un hayon classique fini.

Le document FR-3 029 164 décrit un ouvrant de véhicule dans lequel le becquet est intégré au hayon et réalisé en deux parties, l'une étant fixée sur le corps du hayon avant la fixation de la vitre et l'autre qui recouvre le bord supérieur de la vitre et qui est fixée sur le corps du hayon après la fixation de la vitre.

Cependant, la deuxième partie est fixée sur le corps du hayon par un élément de fixation traversant le corps du hayon de l'intérieur vers l'extérieur, ce qui complique le procédé d'assemblage du hayon en obligeant un opérateur à positionner la deuxième partie depuis l'extérieur du hayon et à assurer la fixation depuis l'intérieur dans une zone peu accessible. En outre, une telle fixation peut poser des problèmes d'étanchéité puisqu'un orifice traversant le corps du hayon entre l'intérieur et l'extérieur doit être prévu pour le passage de l'élément de fixation.

L'un des buts de l'invention est de pallier ces inconvénients en proposant un ouvrant de véhicule pouvant être assemblé de façon simple, tout en assurant une étanchéité fiable de l'ouvrant.

A cet effet, l'invention concerne un ouvrant de véhicule selon la partie caractérisante de la revendication 1.

En fixant le deuxième élément de garnissage par un élément de fixation passant par l'espace s'étendant entre le premier élément de garnissage et la vitre, la fixation du deuxième élément de garnissage s'effectue uniquement depuis l'extérieur du hayon et ne nécessite pas d'accès au côté intérieur du hayon. En outre, une telle fixation ne nécessite pas d'ouverture s'étendant de l'intérieur à l'extérieur de l'ouvrant, ce qui en améliore l'étanchéité.

L'ouvrant de véhicule peut comprendre l'une ou plusieurs des caractéristiques des revendications 2 à 6, prises isolément ou selon toute combinaison techniquement envisageable.

L'invention concerne également un procédé d'assemblage d'un ouvrant de véhicule tel que décrit ci-dessus selon la revendication 7.

Selon une autre caractéristique optionnelle du procédé d'assemblage, le procédé peut comprendre la caractéristique de la revendication 8.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective depuis l'extérieur d'un ouvrant de véhicule selon l'invention,
- la Fig. 2 est une représentation schématique en coupe de l'ouvrant selon l'axe II-II de la Fig. 1,
- la Fig. 3 est une représentation schématique en coupe de l'ouvrant selon l'axe III-III de la Fig. 1, et
- les Figs 4 à 7 sont des représentations schématiques en perspective des différentes étapes d'assemblage du hayon selon l'invention.

Dans la description, on définit les termes « inférieur », « supérieur », « latéral », « avant », « arrière » selon les directions usuelles d'un véhicule monté, ces termes se référant, le cas échéant, à la position des éléments de l'ouvrant lorsqu'il est monté et fermé sur le véhicule. Le terme « intérieur » se réfère à ce qui est tourné vers la caisse du véhicule et le terme « extérieur » à ce qui est tourné vers l'extérieur du véhicule lorsque l'ouvrant est monté sur le véhicule.

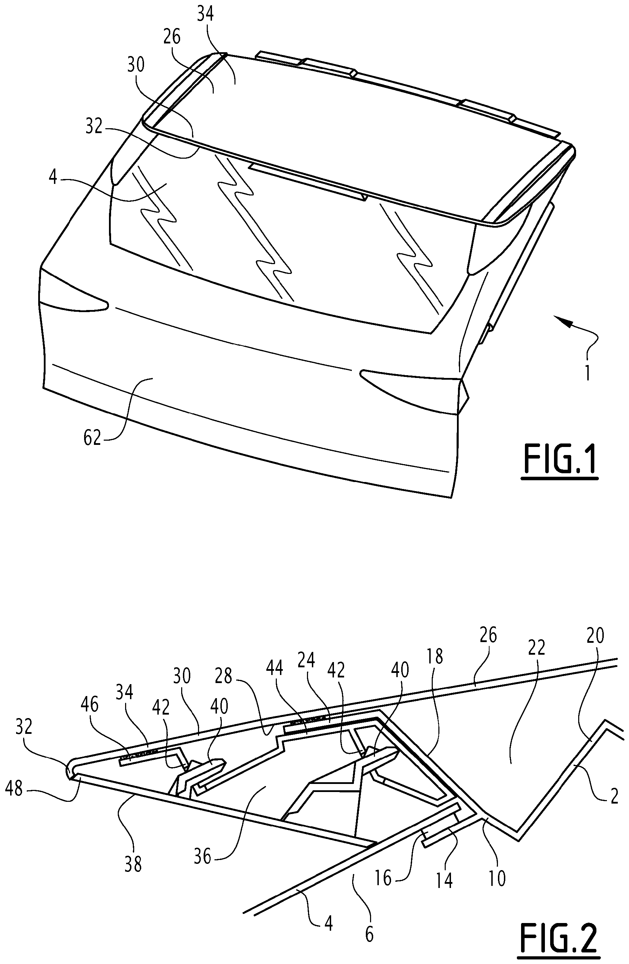

En référence à la Fig. 1, on décrit un ouvrant 1 de véhicule destiné à fermer une ouverture de la caisse du véhicule et à être mobile par rapport à la caisse pour libérer un accès à cette ouverture dans une position ouverte de l'ouvrant 1. L'ouvrant de véhicule 1 représenté sur les figures est un hayon destiné à fermer l'ouverture d'accès à l'espace de rangement arrière, ou coffre, du véhicule. Il est cependant entendu que l'invention pourrait, selon d'autres modes de réalisation, s'appliquer à d'autres ouvrants du véhicule.

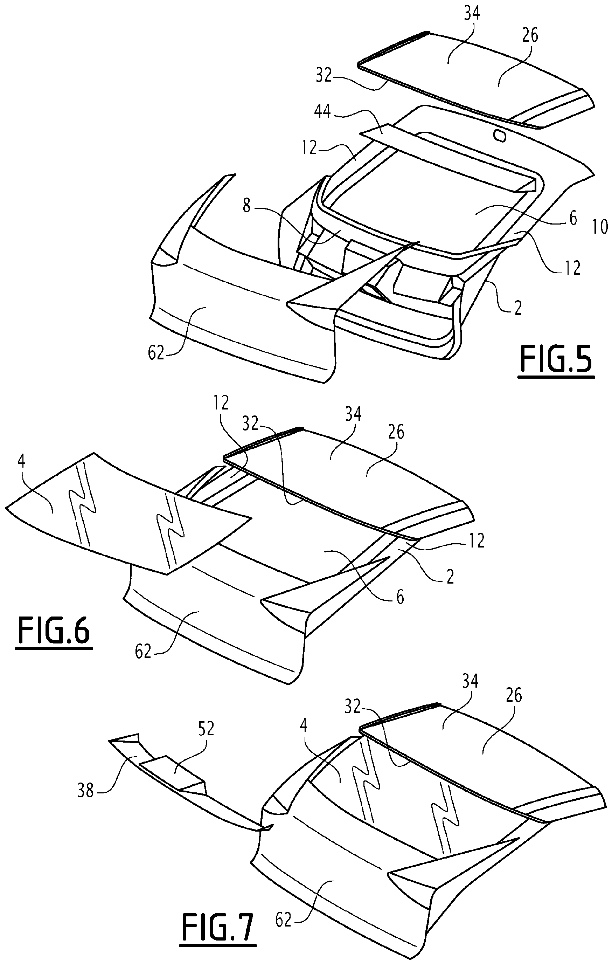

L'ouvrant 1 comprend un corps 2 principal, plus particulièrement visible sur les Figs. 5 et 6. Le corps 2 est par exemple réalisé d'une seule pièce en matière plastique. Le corps 2 peut en outre comprendre un ou plusieurs renforts métalliques, par exemple surmoulé par la matière plastique. Le corps 2 peut également comprendre des nervures de renfort. Ainsi, comme connu en soi, le corps 2 confère à l'ouvrant ses propriétés de rigidité et de caractéristiques mécaniques.

De façon connue, le corps 2 est agencé pour recevoir des éléments fonctionnels de l'ouvrant, tels que des éléments optiques, un ou plusieurs faisceaux de câbles électriques, une serrure, etc.

Le corps 2 est également agencé pour recevoir une vitre 4, formant par exemple la lunette arrière dans le cas d'un hayon, permettant de voir au travers de l'ouvrant 1. Pour ce faire, le corps 2 définit une ouverture 6 traversant le corps 2 de l'extérieur vers l'intérieur. Le corps 2 forme un cadre entourant l'ouverture 6 et comprenant notamment un un bord inférieur 8, une branche supérieure 10 et deux montants latéraux 12 reliant le bord inférieur 8 à la branche supérieure 10 de part et d'autre de l'ouverture 6.

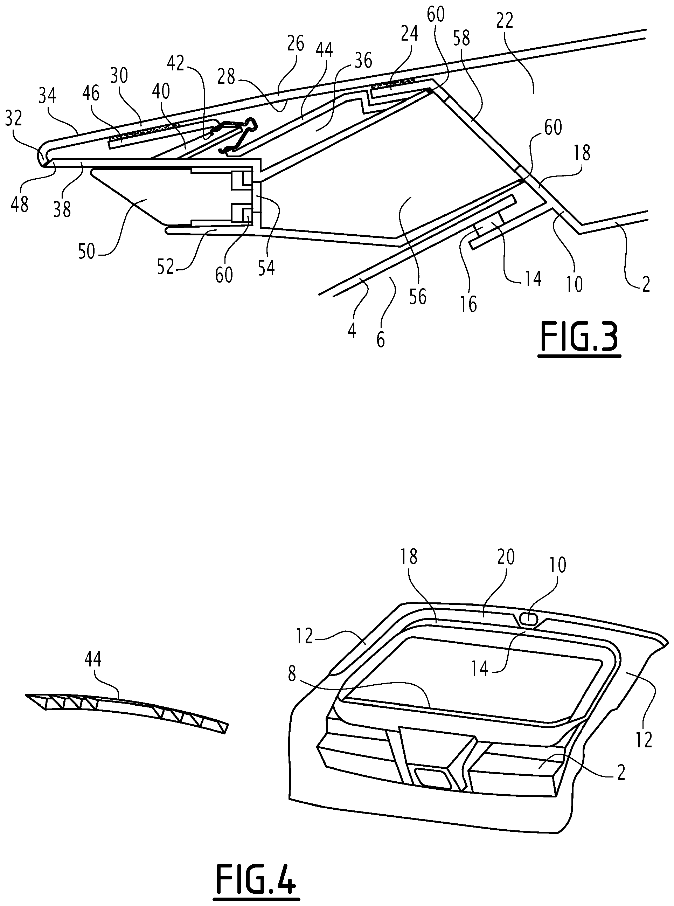

La vitre 4 est fixée sur le cadre entourant l'ouverture 6 de façon à fermer l'ouverture, comme représenté sur les Figs. 1 et 7. La vitre 4 est fixée sur la face externe du corps 2 de sorte à permettre un montage par l'extérieur, comme cela sera décrit ultérieurement. La fixation de la vitre sur la branche supérieure 10 se fait sur un bord supérieur 14 de la branche supérieure s'étendant le long de l'ouverture 6 et formant une surface de réception d'un bord supérieur de la vitre 4, comme représenté sur les Figs. 2 et 3. La fixation de la vitre 4 sur le bord supérieur 14, comme sur les autres bords de l'ouverture, se fait par exemple par collage, par exemple au moyen d'un ruban de colle 16, assurant la fixation de la vitre 4 et l'étanchéité entre le vitre 4 et le cadre.

Comme représenté sur les Figs. 2 et 3, la branche supérieure 10 comprend en outre une paroi 18 s'étendant en saillie de du bord supérieur 14, définissant avec une paroi opposée 20, une cavité 22 ouverte vers l'extérieur du corps 2 selon la direction d'élévation du véhicule. La paroi 18 comprend à son extrémité libre opposée au bord supérieur 14, un décrochement 24 s'étendant en regard du bord supérieur 14 et formant une surface d'appui et de fixation.

La branche supérieure 10 est recouverte par un premier élément de garnissage 26 fixé sur le corps 2 de sorte à fermer de façon étanche la cavité 22. Le premier élément de garnissage 26 est notamment disposé sur et fixé au décrochement 24, par exemple par collage de la face interne 28 du premier élément de garnissage 26 sur la face externe du décrochement 24. Ainsi, le décrochement 24 soutient une partie de l'élément de garnissage 26. Le premier élément de garnissage 26 comprend en outre une partie en saillie 30 s'étendant en saillie du décrochement 24 en regard de la vitre 4. Ainsi, la partie en saillie 30 forme une proéminence s'étendant en regard de la vitre 4 et espacée de celle-ci, agencée pour s'étendre dans la continuité du toit du véhicule lorsque l'ouvrant 1 est fermé. A son extrémité libre, la partie en saillie 30 comprend par exemple un retour agencé pour former une arête pointue 32. En d'autres termes, le premier élément de garnissage 26 est agencé pour former la surface externe supérieure de l'ouvrant 1 et est adapté pour former la partie supérieure d'un béquet s'étendant en saillie et en regard de la vitre 4. A cet effet, au moins la face externe 34 du premier élément de garnissage 26, qui forme la partie visible depuis l'extérieur du véhicule du premier élément de garnissage, est par exemple peinte pour lui conférer un aspect plaisant.

La partie en saillie 30 définit, avec le bord supérieur 14 et la vitre 4, un espace fonctionnel 36 s'étendant entre la face externe de la vitre 4 et la face interne 28 du premier élément de garnissage 26 ainsi que la face interne du décrochement 24. Vers l'intérieur, l'espace fonctionnel 36 est fermé par la paroi 18 s'étendant en le bord supérieur 14 et la face interne 28 du premier élément de garnissage 26. Vers l'extérieur, l'espace fonctionnel 36 est ouvert, de sorte à laisser un accès vers le corps 2 entre le bord supérieur 14 et la face interne 28 du premier élément de garnissage 26 et permettre le montage de l'ouvrant 1, comme cela sera décrit ultérieurement.

Lorsque l'ouvrant 1 est monté, l'espace fonctionnel 36 est fermé vers l'extérieur par un deuxième élément de garnissage 38 s'étendant entre la vitre 4 et l'extrémité libre du premier élément de garnissage 26. Le deuxième élément de garnissage 38 forme ainsi la partie inférieure du béquet. Le deuxième élément de garnissage 38 est fixé au corps 2 par au moins un élément de fixation 40 s'étendant dans l'espace fonctionnel 36, par exemple en saillie de la face interne du deuxième élément de garnissage 38. L'élément de fixation 40 est par exemple formé par un élément d'encliquetage agencé pour coopérer avec un orifice 42 correspondant par clipsage. Selon le mode de réalisation représenté sur les figures, le deuxième élément de garnissage 38 est fixé par plusieurs éléments de fixation 40 répartis le long du deuxième élément de garnissage 38. Dans tous les cas, le deuxième élément de garnissage 38 est fixé au corps exclusivement par un ou des éléments de fixation 40 s'étendent exclusivement dans l'espace fonctionnel 36. En d'autres termes, le deuxième élément de garnissage 38 n'est fixé au corps 2 que par un ou des éléments de fixation 40 passant dans l'espace fonctionnel 36, c'est-à-dire par l'extérieur de l'ouvrant 1. Il n'est donc pas nécessaire d'avoir accès au côté intérieur de l'ouvrant 1 pour fixer le deuxième élément de garnissage 38, comme cela sera décrit ultérieurement.

La fixation du deuxième élément de garnissage 38 sur le corps 2 se fait, selon un mode de réalisation, par une pièce d'interface 44 fixée sur le corps 2 dans l'espace fonctionnel 36. La pièce d'interface 44 comprend le ou les orifices 42 du ou des éléments de fixation 40 du deuxième élément de garnissage 38. Ainsi, il n'est pas nécessaire de pratiquer les orifices 42 dans la paroi 18 de la branche supérieure 10, ce qui permet d'en préserver l'étanchéité. La pièce d'interface 44 est par exemple fixée par collage à la paroi 18 et/ou à la face interne du décrochement 24 ou au moyen d'éléments de fixation étanches, tels que des rivets étanches ou autre. Selon un mode de réalisation et comme représenté sur les Figs 2 et 3, la pièce d'interface 44 comprend en outre une branche de support 46 s'étendant en regard de la partie en saillie 30 du premier élément de garnissage 26 de sorte que la face interne 28 du premier élément de garnissage 26 peut être disposée sur la branche de support 46, et par exemple fixée sur celle-ci par collage, afin d'assurer un support de la partie en saillie 30 et en conserver la rigidité.

Grâce à la fixation du deuxième élément de garnissage 38 par les éléments de fixation 40 s'étendant dans l'espace fonctionnel 36, il n'est pas nécessaire de fixer le deuxième élément de garnissage 38 directement au premier élément de garnissage 26. Ainsi, une extrémité libre 48 du deuxième élément de garnissage 38 peut être simplement placée contre l'extrémité libre du premier élément de garnissage 26, plus particulièrement contre le retour formé à cette extrémité libre, sans être fixée à celui-ci. Ce contact en affleurement entre les deux extrémités libres permet d'affiner le retour formé à l'extrémité libre du premier élément de garnissage 26 et ainsi accentuer la pointe formée par l'arête 32 du becquet, comme visible sur les Figs. 2 et 3. Cette accentuation permet d'améliorer les performances aérodynamiques du becquet ainsi que son apparence.

Le premier élément de garnissage 26 et le deuxième élément de garnissage 38 étant formés par des pièces distinctes, ces éléments de garnissage 26 et 38 peuvent présenter des aspects différents l'un de l'autre. Plus particulièrement, le deuxième élément de garnissage 38 n'a pas besoin d'être peint avec le premier élément de garnissage 26 et ainsi présenté un aspect « brut », par exemple noir mat, comme cela est souvent souhaité pour un tel enjoliveur.

Ainsi, l'ouvrant 1 selon l'invention présente un aspect particulièrement satisfaisant.

Selon un mode de réalisation, le deuxième élément de garnissage 38 forme un support pour un élément optique 50, par exemple un feu stop du véhicule. A cet effet, le deuxième élément de garnissage 38 comprend un logement 52 recevant l'élément optique 50, comme représenté sur la Fig. 3. L'alimentation électrique de l'élément optique 50 est assuré par au moins un câble électrique (non représenté) relié à une source de courant, par exemple prévue dans le véhicule automobile. Pour permettre le passage du câble, le fond du logement 52 comprend un orifice de passage 54 débouchant dans un tunnel 56 formé par le deuxième élément de garnissage 38. Le tunnel 56 s'étend jusqu'à la paroi 18 de la branche supérieure 10 et encadre une ouverture 58 pratiquée dans cette paroi 18, de sorte que le câble électrique peut passer dans le tunnel 56 et l'ouverture 58 et ainsi passer vers l'intérieur du véhicule. L'appui du tunnel contre la paroi 18 autour de l'ouverture 58 est un appui étanche de sorte à préserver l'étanchéité de la cavité 22. De même, pour préserver cette étanchéité, l'élément optique 50 est placé en appui étanche contre le fond du logement 52 autour de l'orifice 54. Ces appuis étanches sont par exemple assurés au moyens de joints 60.

Le procédé d'assemblage de l'ouvrant 1 décrit ci-dessus va à présent être décrit, notamment en référence aux Figs. 4 à 7.

Le corps principal 2 est réalisé par exemple par moulage par injection, et, comme représenté sur les Figs. 4 et 5, la pièce intermédiaire 44 est, le cas échéant, fixé sur la branche supérieure 10 du corps 2, par exemple par collage.

Les surfaces extérieures de l'ouvrant 1 sont ensuite assemblées sur le corps 2, comme représenté sur la Fig. 5. Ces surfaces extérieures comprennent notamment le premier élément de garnissage 26 décrit précédemment et une peau de garnissage 62 recouvrant la partie inférieure du corps 2 jusqu'au bord inférieur 8 de l'ouverture 6, comme connu en soi.

La fixation du premier élément de garnissage 26 se fait par exemple par collage, sur des surfaces de fixation s'étendant de part et d'autre de la cavité 22, notamment sur le décrochement 24, et sur la branche de support 46 de la pièce d'interface 44 lorsque celle-ci est prévue. A l'issue de cet assemblage, la cavité 22, et plus généralement la face externe du corps 2, sont fermées de façon étanche. La partie supérieure du becquet est ainsi intégrée à l'ouvrant 1 et ne forme pas une pièce rapportée fixée sur l'ouvrant 1 fini.

Une étape, non représentée, d'assemblage d'une garniture intérieure sur la face interne du corps 2 peut également être prévue.

Les étapes d'assemblage ci-dessus peuvent par exemple être réalisées chez un équipementier automobile afin d'être livré d'un seul tenant à un constructeur automobile, qui peut alors effectuer les étapes d'assemblage qui vont être décrites à présent.

Comme représenté sur la Fig. 6, la vitre 4 est ensuite fixée sur le cadre entourant l'ouverture, notamment sur le bord supérieur 14, par exemple par collage. Cette fixation se fait par l'extérieur du corps 2 en passant par l'espace fonctionnel 36 s'étendant entre la face interne de la partie en saillie 30 du premier élément de garnissage 26 et le bord supérieur 14. A cet effet, cet espace fonctionnel 36 est dimensionné pour permettre le passage de la partie supérieure de la vitre 4 vers le bord supérieur 14 sans interférence avec le premier élément de garnissage 26, ce qui facilite le montage de la vitre 4.

Enfin, le deuxième élément de garnissage 38 est monté sur l'ouvrant 1 pour fermer l'espace fonctionnel 36. Comme indiqué précédemment, la fixation du deuxième élément de garnissage 38 se fait uniquement par l'extérieur de l'ouvrant, sans nécessiter d'accès au côté intérieur du corps 2, ce qui simplifie grandement le montage de l'ouvrant 1 et améliore l'étanchéité de l'ouvrant 1. L'opération de fixation du deuxième élément de garnissage 38 se fait simplement en enfonçant le deuxième élément de garnissage 38 dans l'espace fonctionnel 36 jusqu'à ce que le ou les éléments de fixation 40 coopèrent avec les bords du ou des orifices 42 correspondants, ce qui est une opération très simple et rapide à effectuer. Seuls des déflecteurs latéraux peuvent nécessiter un accès depuis l'intérieur du véhicule. Cependant le montage de ces déflecteurs se fait dans une zone où l'étanchéité n'est pas nécessaire sur les côtés de l'ouvrant.

## Revendications

1. Ouvrant (1) de véhicule comprenant un corps principal (2) définissant une ouverture (6) fermée par une vitre (4), fixée sur au moins un bord supérieur (14) de ladite ouverture (6), ledit bord supérieur (14) étant formé sur une branche supérieure (10) dudit corps (2), ladite branche supérieure (10) comprenant en outre une cavité (22) ouverte vers l'extérieur du corps (2), l'ouvrant comprenant en outre un premier élément de garnissage (26) fixé sur la branche supérieure (10) de façon à fermer hermétiquement ladite cavité (22), le premier élément de garnissage (26) comprenant une partie en saillie (30) s'étendant en saillie de la branche supérieure (10) en regard de la vitre (4), de sorte qu'un espace fonctionnel (36) s'étend entre ladite vitre (4) et ladite partie en saillie (30), l'ouvrant comprend en outre un deuxième élément de garnissage (38) fermant ledit espace fonctionnel (36), ledit ouvrant étant **caractérisé en ce que** ledit deuxième élément de garnissage (38) est fixé au corps (2) exclusivement par au moins un élément de fixation (40) s'étendant dans l'espace fonctionnel (36) entre ledit premier élément de garnissage (26) et ladite vitre (4),
**en ce que** le deuxième élément de garnissage (38) est fixé au corps (2) par l'intermédiaire d'une pièce d'interface (44), fixée au corps (2) entre le bord supérieur (14) et le premier élément de garnissage (26) et s'étendant dans l'espace fonctionnel (36), ladite pièce d'interface (44) comprenant au moins un orifice (42) de réception de l'élément de fixation (40) du deuxième élément de garnissage (38), et
**en ce que** la pièce d'interface (44) comprend une branche de support (46) s'étendant en regard de la partie en saillie (30) du premier élément de garnissage (26), ladite partie en saillie (30) étant fixée sur ladite branche de support (46).

2. Ouvrant de véhicule selon la revendication 1, dans lequel le deuxième élément de garnissage (38) comprend une extrémité libre (48) affleurant l'extrémité libre de la partie en saillie (28) du premier élément de garnissage (26), lesdites extrémités libres formant une arête pointue (32) s'étendant en regard de la vitre (4).

3. Ouvrant de véhicule selon la revendication 1 ou 2, dans lequel au moins un élément optique (50) est fixé dans un logement (52) formé dans le deuxième élément de garnissage (38).

4. Ouvrant de véhicule selon la revendication 3, dans lequel l'élément optique (50) est relié à une source de courant par au moins un câble électrique, ledit câble passant par un orifice (54) formé dans le fond du logement (52), ledit orifice (54) étant relié de façon étanche à une ouverture (58) débouchant dans la cavité (22) du corps (2), de sorte que le câble électrique passe dans ladite cavité (22) du corps (2).

5. Ouvrant de véhicule selon l'une quelconque des revendications 1 à 4, dans lequel le premier élément de garnissage (26) est collé sur la branche supérieure (10) du corps (2).

6. Ouvrant de véhicule selon l'une quelconque des revendications 1 à 5, dans lequel le premier élément de garnissage (26) et le deuxième élément de garnissage (38) présentent un aspect différent l'un de l'autre.

7. Procédé d'assemblage d'un ouvrant de véhicule selon l'une quelconque des revendications 1 à 6, comprenant les étapes successives suivantes :
- fixer le premier élément de garnissage (26) sur la branche supérieure (10) du corps (2),
- placer la vitre (4) sur l'ouverture (6) et fixer la vitre (4) sur le bord supérieur (14) de l'ouverture (6),
- fermer l'espace fonctionnel (36) entre la vitre (4) et la partie en saillie (28) du premier élément de garnissage (26) au moyen du deuxième élément de garnissage (38), la fixation dudit deuxième élément de garnissage (38) se faisant uniquement dans ledit espace fonctionnel (36).

8. Procédé d'assemblage selon la revendication 7, dans lequel la pièce d'interface (44) est fixée sur le corps (2) avant la fixation du premier élément de garnissage (26) sur la branche supérieure (10) du corps (2).

## Patentansprüche

1. Öffnungselement (1) für Fahrzeug, umfassend einen Hauptkörper (2), der eine Öffnung (6) definiert, die durch eine Glasscheibe (4) geschlossen ist, die an mindestens einem oberen Rand (14) der Öffnung (6) befestigt ist, wobei der obere Rand (14) an einem oberen Schenkel (10) des Körpers (2) gebildet ist, der obere Schenkel (10) ferner umfassend einen Hohlraum (22), der zu der Außenseite des Körpers (2) offen ist, das Öffnungselement ferner umfassend ein erstes Verkleidungselement (26), das an dem oberen Schenkel (10) befestigt ist, um den Hohlraum (22) hermetisch zu schließen, das erste Verkleidungselement (26) umfassend einen hervorstehenden Abschnitt (30), der sich hervorstehend von dem oberen Schenkel (10) gegenüber der Glasscheibe (4) erstreckt, sodass sich zwischen der Glasscheibe (4) und dem hervorstehenden Abschnitt (30) ein funktioneller Raum (36) erstreckt,
das Öffnungselement ferner umfassend ein zweites Verkleidungselement (38), das den funktionellen Raum (36) schließt, wobei das Öffnungselement **dadurch gekennzeichnet ist, dass** das zweite Verkleidungselement (38) ausschließlich durch mindestens ein Befestigungselement (40), das sich zwischen dem ersten Verkleidungselement (26) und der Glasscheibe (4) in den funktionellen Raum (36) erstreckt, an dem Körper (2) befestigt ist,
dass das zweite Auskleidungselement (38) über ein Schnittstellenteil (44) an dem Körper (2) befestigt ist, das zwischen dem oberen Rand (14) und dem ersten Verkleidungselement (26) an dem Körper (2) befestigt ist und sich in den funktionellen Raum (36) erstreckt, das Schnittstellenteil (44) umfassend mindestens eine Öffnung (42) zum Aufnehmen des Befestigungselements (40) des zweiten Verkleidungselements (38), und
dass das Schnittstellenteil (44) einen Stützschenkel (46) umfasst, der sich gegenüber dem hervorstehenden Teil (30) des ersten Verkleidungselements (26) erstreckt, wobei das hervorstehende Teil (30) an dem Stützschenkel (46) befestigt ist.

2. Fahrzeug-Öffnungselement nach Anspruch 1, wobei das zweite Verkleidungselement (38) ein freies Ende (48) umfasst, das das freie Ende des hervorstehenden Teils (28) des ersten Verkleidungselements (26) abschließt, wobei die freien Enden eine spitze Kante (32) bilden, die sich gegenüber der Glasscheibe (4) erstreckt.

3. Fahrzeug-Öffnungselement nach Anspruch 1 oder 2, wobei mindestens ein optisches Element (50) in einer Aufnahme (52) befestigt ist, die in dem zweiten Verkleidungselement (38) gebildet ist.

4. Fahrzeug-Öffnungselement nach Anspruch 3, wobei das optische Element (50) über mindestens ein elektrisches Kabel mit einer Stromquelle verbunden ist, wobei das Kabel durch eine Öffnung (54) verläuft, die in dem Boden der Aufnahme (52) gebildet ist, wobei die Öffnung (54) dicht mit einer Öffnung (58) verbunden ist, die in den Hohlraum (22) des Körpers (2) mündet, sodass das elektrische Kabel in den Hohlraum (22) des Körpers (2) verläuft.

5. Fahrzeug-Öffnungselement nach einem der Ansprüche 1 bis 4, wobei das erste Verkleidungselement (26) auf den oberen Schenkel (10) des Körpers (2) geklebt ist.

6. Fahrzeug-Öffnungselement nach einem der Ansprüche 1 bis 5, wobei das erste Verkleidungselement (26) und das zweite Verkleidungselement (38) ein voneinander abweichendes Aussehen aufweisen.

7. Montageverfahren eines Fahrzeug-Öffnungselements nach einem der Ansprüche 1 bis 6, umfassend die folgenden Schritte:
- Befestigen des ersten Verkleidungselement (26) an dem oberen Schenkel (10) des Körpers (2),
- Platzieren der Glasscheibe (4) über der Öffnung (6) und Befestigen der Glasscheibe (4) an dem oberen Rand (14) der Öffnung (6),
- Schließen des funktionellen Raums (36) zwischen der Glasscheibe (4) und dem hervorstehenden Teil (28) des ersten Verkleidungselements (26) mittels des zweiten Verkleidungselements (38), wobei das Befestigen des zweiten Verkleidungselements (38) ausschließlich in dem funktionellen Raum (36) erfolgt.

8. Montageverfahren nach Anspruch 7, wobei das Schnittstellenteil (44) auf dem Körper (2) befestigt wird, bevor das erste Verkleidungselement (26) an dem oberen Schenkel (10) des Körpers (2) befestigt wird.

## Claims

1. A vehicle opening part (1), comprising a main body (2) defining an opening (6) closed by a window (4), attached on at least one upper edge (14) of said opening (6), said upper edge (14) being formed on an upper branch (10) of said body (2), said upper branch (10) further comprising a cavity (22) open toward the outside of the body (2), the opening part further comprising a first trim element (26) attached on the upper branch (10) so as to hermetically close said cavity (22), the first trim element (26) comprising a projecting part (30) projecting from the upper branch (10) across from the window (4), such that a functional space (36) extends between said window (4) and said projecting part (30),
the opening part further comprises a second trim element (38) closing said functional space (36), said opening part being **characterized in that** said second trim element (38) is attached to the body (2) exclusively by at least one fastening element (40) extending in the functional space (36) between said first trim element (26) and said window (4),
**in that** the second trim element (38) is attached to the body (2) via an interface part (44), attached to the body (2) between the upper edge (14) and the first trim element (26) and extending in the functional space (36), said interface part (44) comprising at least one orifice (42) for receiving the fastening element (40) of the second trim element (38), and
**in that** the interface part (44) comprises a support branch (46) extending across from the projecting part (30) of the first trim element (26), said projecting part (30) being attached on said support branch (46).

2. The vehicle opening part according to claim 1, wherein the second trim element (38) comprises a free end (48) flush with the free end of the projecting part (28) of the first trim element (26), said free ends forming a pointed edge (32) extending across from the window (4).

3. The vehicle opening part according to claim 1 or 2, wherein at least one optical element (50) is attached in a housing (52) formed in the second trim element (38).

4. The vehicle opening part according to claim 3, wherein the optical element (50) is connected to a current source by at least one electric cable, said cable passing through an orifice (54) formed in the bottom of the housing (52), said orifice (54) being connected sealably to an opening (58) emerging in the cavity (22) of the body (2), such that the electric cable passes in said cavity (22) of the body (2).

5. The vehicle opening part according to any one of claims 1 to 4, wherein the first trim element (26) is glued on the upper branch (10) of the body (2).

6. The vehicle opening part according to any one of claims 1 to 5, wherein the first trim element (26) and the second trim element (38) have a different appearance from one another.

7. A method for assembly a vehicle opening part according to any one of claims 1 to 6, comprising the following successive steps:
- attaching the first trim element (26) on the upper branch (10) of the body (2),
- placing the window (4) over the opening (6) and attaching the window (4) on the upper edge (14) of the opening (6),
- closing the functional space (36) between the window (4) and the projecting part (28) of the first trim element (26) using the second trim element (38), the attachment of said second trim element (38) being done only in said functional space (36).

8. The assembly method according to claim 7, wherein the interface part (44) is attached on the body (2) before the attachment of the first trim element (26) on the upper branch (10) of the body (2).
